# EUROPÄISCHE PATENTSCHRIFT

(11) **EP 1 276 640 B1**
(45) Veröffentlichungstag und Bekanntmachung des Hinweises auf die Patenterteilung: **12.11.2003**
(21) Anmeldenummer: 01929314.1
(22) Anmeldetag: 05.04.2001
(51) Int. Cl.: B60R 21/01

(54) **ANORDNUNG ZUR PLAUSIBILISIERUNG EINER ÜBERROLLENTSCHEIDUNG**
ARRANGEMENT FOR PLAUSIBILIZING A ROLLOVER DECISION
DISPOSITIF DE PLAUSIBILISATION D'UNE DETECTION DE RETOURNEMENT

(30) Priorität: 19.04.2000 DE 10019416
(43) Veröffentlichungstag der Anmeldung: 22.01.2003
(73) Patentinhaber: ROBERT BOSCH GMBH, 70442 Stuttgart (DE)
(72) Erfinder: MATTES, Bernhard, 74343 Sachsenheim (DE); KISSNER, Juergen, 71701 Schwieberdingen (DE); WOTTRENG, Walter, Takasaki-shi, Gunama-ken 370-084 (JP); LANG, Hans-Peter, 71638 Ludwigsburg (DE); KNOEDLER, Kosmas, 74321 Bietigheim-Bissingen (DE)
(86) Internationale Anmeldenummer: DE0101320
(87) Internationale Veröffentlichungsnummer: WO01079036

(56) Entgegenhaltungen:
- EP-A- 0 430 813
- DE-A- 19 650 629
- DE-A- 19 744 083

## Beschreibung

Die vorliegende Erfindung betrifft eine Anordnung zur Plausibilisierung einer Überrollentscheidung in einem Kraftfahrzeug, wobei ein oder mehrere Drehraten- und/oder Beschleunigungssensoren Bewegungen des Fahrzeugs erfassen und ein Prozessor aus den Sensorsignalen eine Entscheidung ableitet, ob die Fahrzeugbewegungen zu einem Überrollen führen werden, und wobei Mittel vorhanden sind, welche aus gemessenen Beschleunigungen in Richtung der Hochachse und der Querachse des Fahrzeugs ein Kriterium zur Plausibilisierung einer getroffenen Überrollentscheidung bilden.

Aus der DE 197 44 083 A1 ist eine Anordnung bekannt, welche ein Auslösesignal für Rückhalteeinrichtungen im Fahrzeug erzeugt, wenn sie aufgrund von gemessenen Drehraten bzw. Beschleunigungen einen bevorstehenden Überrollvorgang des Fahrzeugs erkennt. Falls es zu einem Überschlag eines Fahrzeugs kommen wird, müssen rechtzeitig alle im Fahrzeug installierten Insassen-Schutzeinrichtungen ausgelöst werden, dazu gehören beispielsweise Überrollbügel, Gurtstraffer, Airbags etc. Damit all diese Schutzeinrichtungen rechtzeitig ausgelöst werden können, muß möglichst früh erkannt werden, ob Bewegungen des Fahrzeugs, z. B. Drehungen um seine Längsachse, seine Querachse oder Hochachse zu einem Überrollen führen werden. Die Rückhalteeinrichtungen im Fahrzeug sollten auch wirklich nur dann ausgelöst werden, wenn es tatsächlich zu einem Überrollen des Fahrzeugs kommt.

Um Überrollfehlentscheidungen und damit Fehlauslösungen von Rückhalteeinrichtungen zu vermeiden, wird gemäß der DE 197 44 083 A1 jede Überrollentscheidung einer Plausibilitätsüberprüfung unterzogen. Fehler bei einer Überrollentscheidung können z. B. dadurch auftreten, daß Drehraten- bzw. Beschleunigungssensoren oder ein Prozessor, in dem die Überrollentscheidung gebildet wird, fehlerhaft arbeiten. Wie aus der DE 197 44 083 A1 hervorgeht, erfolgt die Plausibilitätsprüfung in der Weise, daß zwei Überrollentscheidungskriterien gebildet werden und ein bevorstehender Überrollvorgang nur dann signalisiert wird und eine Auslösung von Rückhalteeinrichtungen erfolgt, wenn beide Entscheidungskriterien gleichzeitig erfolgt sind. Das erste Überrollentscheidungskriterium wird allein aus Drehraten des Fahrzeugs um seine Längs-, Quer- und Hochachse gebildet. Das zweite Entscheidungskriterium wird aus gemessenen Beschleunigungen in Richtung der 3 Fahrzeugsachsen abgeleitet, wobei aus den gemessenen Beschleunigungen zunächst Kippwinkel des Fahrzeugs um seine Längs- und seine Querachse berechnet und diese Kippwinkel einer Schwellwertentscheidung unterzogen werden. Über den Prozeß der Schwellwertentscheidung ist in dieser Druckschrift nichts ausgesagt.

Der Erfindung liegt die Aufgabe zugrunde, eine Anordnung der eingangs genannten Art anzugeben, die mit geringem Aufwand eine möglichst zuverlässige Plausibilisierung einer Überrollentscheidung durchführt.

### Vorteile der Erfindung

Die genannte Aufgabe wird mit den Merkmalen des Anspruchs 1 dadurch gelöst, daß Mittel vorhanden sind, welche Plausibilität einer Überrollentscheidung signalisieren, wenn entweder die in Richtung der Hochachse gemessene Beschleunigung oberhalb eines vorgegebenen oberen Schwellwertes oder unterhalb eines vorgegebenen unteren Schwellwertes liegt, oder wenn die in Richtung der Hochachse gemessene Beschleunigung zwischen den beiden Schwellen liegt, aber gleichzeitig die in Richtung der Querachse gemessene Beschleunigung eine Schwelle überschreitet, welche von der in Richtung der Hochachse gemessenen Beschleunigung abhängt.

Gemäß der Erfindung wird lediglich aus den in Richtung der Hochachse und der Querachse des Fahrzeugs gemessenen Beschleunigungen ein zuverlässiges Plausibilitätskriterium für eine Überrollentscheidung abgeleitet.

Vorteilhafte Weiterbildungen gehen aus den Unteransprüchen hervor.

Demnach kann der zu jedem Beschleunigungswert in Richtung der Hochachse gehörende Schwellwert für die Beschleunigung in Richtung der Querachse in einer Tabelle abgelegt sein oder es kann die jeweilige Schwelle für die Beschleunigung in Richtung der Querachse aus der aktuell in Richtung der Hochachse gemessenen Beschleunigung nach einem vorgegebenen Algorithmus berechnet werden.

Vorzugsweise liegt die Schwelle für die Beschleunigung in Richtung der Querachse bei einer in Richtung der Längsachse gemessenen Beschleunigung von 1g (g ist Erdbeschleunigung), und die Schwelle für die Beschleunigung in Richtung der Querachse fällt mit von 1g auf 3g zunehmender und von 1g auf 0,2g abnehmender Beschleunigung in Richtung der Hochachse auf einen geringeren Wert als 1g ab.

### Zeichnung

Anhand eines in der Zeichnung dargestellten Ausführungsbeispiels wird nachfolgend die Erfindung näher erläutert. Es zeigen:
Figur 1 ein Blockschaltbild einer Anordnung zur Plausibilisierung einer Überrollentscheidung,
Figur 2 ein Ablaufdiagramm zur Plausibilisierung einer Überrollentscheidung und
Figur 3 ein Schwellwertdiagramm für gemessene Beschleunigungen in Richtung der Hoch- und der Querachse eines Fahrzeugs.

### Beschreibung eines Ausführungsbeispiels

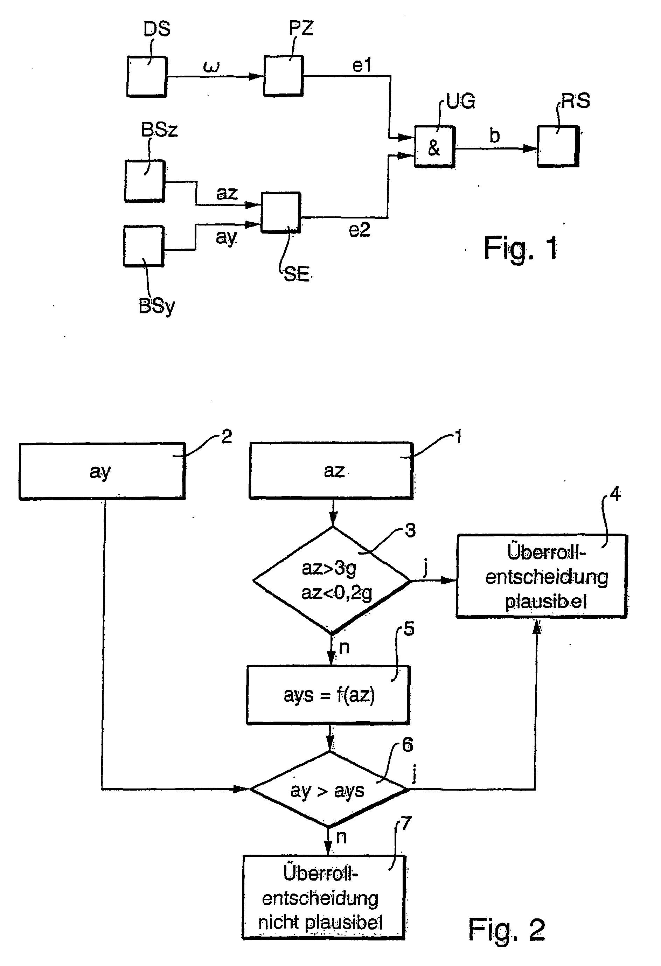

Die in der Figur 1 dargestellte Anordnung zum Erkennen eines bevorstehenden Überrollvorgangs eines Fahrzeugs weist ein oder mehrere Drehratensensoren DS auf, die mindestens die Drehrate ω um eine Achse in Längsrichtung des Fahrzeugs messen. Die mindestens eine gemessene Drehrate ω wird einem Prozessor PZ zugeführt, der aus den Meßdaten nach einem vorgegebenen Algorithmus ableitet, ob die erfaßte Fahrzeugbewegung zu einem Überrollen führen wird. Sollte die Meßdatenauswertung im Prozessor PZ ergeben, daß ein Überrollen des Fahrzeugs bevorsteht, gibt der Prozessor PZ an seinem Ausgang ein Überrollentscheidungssignal e1 ab. Um sicherzugehen, daß diese Überrollentscheidung e1 nicht fehlerbehaftet ist, wird eine Plausibilisierung durchgeführt. Nur wenn ein nachfolgend beschriebener Signalzweig zur Plausibilisierung ebenfalls ein Überrollentscheidungssignal e2 liefert, wird ein Auslösesignal b für Rückhalteeinrichtungen RS (z. B. Airbags, Überrollbügel, Gurtstraffer etc.) generiert. In der Figur 1 ist die Verknüpfung der beiden Überrollentscheidungssignale e1 und e2 und das daraus hervorgehende Auslösesignal b durch ein UND-Gatter UG symbolisiert.

Im Signalzweig für die Plausibilisierung der Überrollentscheidung e1 befinden sich zwei Beschleunigungssensoren BSz, BSy. Der Beschleunigungssensor BSz mißt die Beschleunigung az des Fahrzeugs in Richtung seiner Hochachse, und der Beschleunigungssensor BSy mißt die Beschleunigung ay des Fahrzeugs in Richtung seiner Querachse.

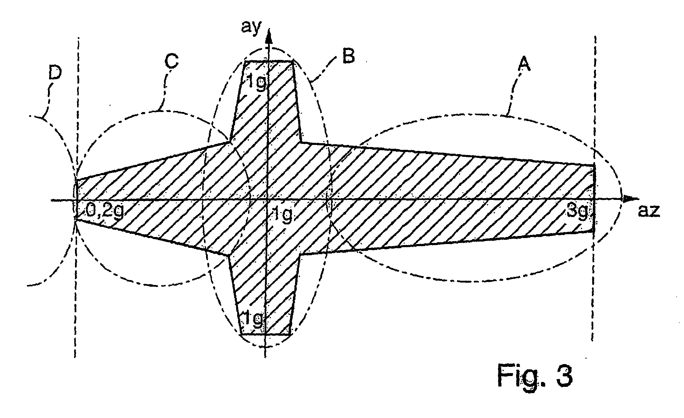

Die von den beiden Beschleunigungssensoren BSz, BSy gelieferten Meßsignale az und ay werden einer Schwellwertentscheidungsschaltung SE zugeführt. Wie von der Schwellwertentscheidungsschaltung SE die Plausibilisierung der Überrollentscheidung durchgeführt wird, wird anhand des in der Figur 2 dargestellten Ablaufdiagramms erläutert. Gemäß den Verfahrensschritten 1 und 2 werden zunächst die in Richtung der Hochachse und in Richtung der Querachse gemessenen Beschleunigungen az und ay aufgenommen. Die gemessenen Beschleunigungen az und ay werden in den folgenden Verfahrensschritten einem Schwellwertentscheidungsprozeß unterzogen, der durch das in der Figur 3 dargestellte Schwellwertdiagramm verdeutlicht wird.

In dem Schwellwertdiagramm der Figur 3 ist die Beschleunigung az in Richtung der Hochachse des Fahrzeugs und die Beschleunigung ay in Richtung der Querachse des Fahrzeugs aufgetragen. Durch Kreise bzw. Ellipsen sind in dem Schwellwertdiagramm Bereiche für die Beschleunigung az und die Beschleunigung ay gekennzeichnet, welche charakteristisch für verschiedene Fahrmanöver sind. Das Gebiet A, welches durch hohe Beschleunigung az in Richtung der Hochachse und geringe Beschleunigungen ay in Richtung der Querachse des Fahrzeugs gekennzeichnet ist, ist charakteristisch für Steilkurvenfahrten. Das Gebiet B, in dem die Beschleunigung az in Richtung der Hochachse gering ist und die Beschleunigung ay in Richtung der Querachse hoch ist, ist charakteristisch für Slalomfahrten. Das Gebiet C ist gekennzeichnet durch ein konstantes Verhältnis der beiden Beschleunigungen az und ay und ist somit charakteristisch für Fahrten auf einer schiefen Ebene. Das Gebiet D, in dem sowohl die Beschleunigung az in Richtung der Hochachse als auch die Beschleunigung ay in Richtung der Querachse nahezu 0g betragen, ist charakteristisch für einen freien Fall des Fahrzeugs. Denn bei einem freien Fall liefern die Sensoren wegen der Schwerelosigkeit keine Meßsignale.

Ist die gemessene Beschleunigung az in Richtung der Hochachse des Fahrzeugs unterhalb einer unteren Schwelle von 0,2g - es liegt dann ein freier Fall des Fahrzeugs vor - soll in jedem Fall eine getroffene Überrollentscheidung als plausibel bestätigt und die Rückhaltesysteme RS ausgelöst werden. Das gleiche gilt, wenn die gemessene Beschleunigung az in Richtung der Fahrzeughochachse eine obere Schwelle von 3g überschreitet. Im Verfahrensschritt 3 (Figur 2) wird die gemessene Beschleunigung az in Richtung der Fahrzeughochachse mit diesen beiden genannten Schwellen 0,2g und 3g verglichen und im Schritt 4 eine Überrollentscheidung als plausibel erklärt, wenn entweder die gemessene Beschleunigung az die obere Schwelle von 3g überschreitet oder die untere Schwelle von 0,2g unterschreitet.

Liegt die gemessene Beschleunigung az in Richtung der Fahrzeughochachse zwischen den beiden Grenzen von 0,2g und 3g und liegt außerdem die gemessene Beschleunigung ay in Richtung der Fahrzeugquerachse innerhalb des schraffierten Bereichs des Schwellwertdiagramms in Figur 3, so soll eine Überrollentscheidung auf jeden Fall als nicht plausibel erklärt werden. Wie dem Schwellwertdiagramm in Figur 3 zu entnehmen ist, besteht zwischen der strichliert gezeichneten Schwelle für die Beschleunigung ay in Richtung der Fahrzeugquerachse und der gemessenen Beschleunigung az in Richtung der Fahrzeughochachse eine bestimmte Abhängigkeit. Diese Abhängigkeit muß für jeden Fahrzeugtyp individuell ermittelt werden. In der Figur 3 ist vereinfacht der Zusammenhang zwischen der Schwelle ays für die Beschleunigung ay in Richtung der Fahrzeugquerachse und der gemessenen Beschleunigung az in Richtung der Fahrzeughochachse mit geraden (strichliert gezeichneten) Linien dargestellt. Abweichend von der Darstellung kann es sehr unterschiedliche Zusammenhänge zwischen der Schwelle asy der Beschleunigung ay und der gemessenen Beschleunigung az geben. Prinzipiell gilt aber, daß die Schwelle ays für die Beschleunigung ay in Richtung der Fahrzeugquerachse abfällt, wenn entweder die Beschleunigung az in Richtung der Fahrzeughochachse von 1g auf 3g zunimmt oder von 1g auf 0,2g abnimmt. Hervorzuheben ist die Konstellation, bei der die Beschleunigung az in Richtung der Fahrzeughochachse 1g beträgt und die Beschleunigung ay in Richtung der Querachse des Fahrzeugs kleiner als 1g ist. In dieser Situation befindet sich das Fahrzeug in einem normalen Fahrmanöver, bei dem es mit allen 4 Rädern Bodenkontakt hat. Erst wenn die Beschleunigung ay in Richtung der Querachse 1g übersteigt, ist ein Überrollen des Fahrzeugs sehr wahrscheinlich.

Wird bei der Schwellwertentscheidung im Verfahrensschritt 3 festgestellt, daß die gemessene Beschleunigung az in Richtung der Fahrzeughochachse nicht kleiner als 0,2g und nicht größer als 3g ist, wird im Verfahrensschritt 5 die Schwelle ays = f(az) für die gemessene Beschleunigung ay in Richtung der Fahrzeugquerachse in Abhängigkeit vom gemessenen Beschleunigungswert az ermittelt. Der Zusammenhang ays = f(az) ist entweder in der Schwellwertentscheiderschaltung SE in einer Tabelle abgelegt oder es wird zu jedem gemessenen Beschleunigungswert az nach einem vorgegebenen Algorithmus die zugehörige Schwelle ays für die Beschleunigung ay berechnet. Im darauffolgenden Verfahrensschritt 6 wird der jeweils gemessene Beschleunigungswert ay in Richtung der Fahrzeughochachse mit der zuvor ermittelten Schwelle ays verglichen. Übersteigt der gemessene Beschleunigungswert ay die Schwelle ays, liegt also die gemessene Beschleunigung ay in Richtung der Fahrzeugquerachse außerhalb des schraffierten Bereichs (siehe Figur 3), so wird die vom Prozessor PZ ausgegebene Überrollentscheidung e1 für plausibel erklärt. Liegt allerdings der gemessene Beschleunigungswert ay unterhalb der Schwelle ays, d.h. ay liegt im schraffierten Bereich des Schwellwertdiagramms, so wird im Verfahrensschritt 7 die Überrollentscheidung e1 des Prozessors PZ für nicht plausibel erklärt. In diesem Fall liefert die Schwellwertentscheiderschaltung SE kein Signal e2.

## Patentansprüche

1. Anordnung zur Plausibilisierung einer Überrollentscheidung in einem Kraftfahrzeug, wobei ein oder mehrere Drehraten- und/oder Beschleunigungssensoren (DS) Bewegungen des Fahrzeugs erfassen und ein Prozessor (PZ) aus den Sensorsignalen (ω) eine Entscheidung (e1) ableitet, ob die Fahrzeugbewegungen zu einem Überrollen führen werden, und wobei Mittel (SE) vorhanden sind, welche aus gemessenen Beschleunigungen (az, ay) in Richtung der Hochachse und der Querachse des Fahrzeugs ein Kriterium zur Plausibilisierung einer getroffenen Überrollentscheidung bilden, **dadurch gekennzeichnet, daß** die Mittel (SE) Plausibilität einer Überrollentscheidung (e1) signalisieren, wenn entweder die in Richtung der Hochachse gemessene Beschleunigung (az) oberhalb eines vorgegebenen oberen Schwellwerts oder unterhalb eines vorgegebenen unteren Schwellwerts liegt, oder wenn die in Richtung der Hochachse gemessene Beschleunigung (az) zwischen den beiden Schwellen liegt, aber gleichzeitig die in Richtung der Querachse gemessene Beschleunigung (ay) eine Schwelle (ays) überschreitet, welche von der in Richtung der Hochachse gemessenen Beschleunigung (az) abhängt.

2. Anordnung nach Anspruch 1, **dadurch gekennzeichnet, daß** der zu jedem Beschleunigungswert (az) in Richtung der Hochachse gehörende Schwellwert (ays) für die Beschleunigung (ay) in Richtung der Querachse in einer Tabelle abgelegt ist.

3. Anordnung nach Anspruch 1, **dadurch gekennzeichnet, daß** die Mittel (SE) die jeweilige Schwelle (ays) für die Beschleunigung (ay) in Richtung der Querachse aus der aktuell in Richtung der Hochachse gemessenen Beschleunigung (az) nach einem vorgegebenen Algorithmus berechnen.

4. Anordnung nach einem der vorhergehenden Ansprüche, **dadurch gekennzeichnet, daß** die Schwelle (ays) für die Beschleunigung (ay) in Richtung der Querachse bei einer in Richtung der Hochachse gemessenen Beschleunigung (az) von 1g (g ist Erdbeschleunigung) bei 1g liegt und daß die Schwelle (ays) für die Beschleunigung (ay) in Richtung der Querachse mit von 1g auf 3g zunehmender und von 1g auf 0,2g abnehmender Beschleunigung (az) in Richtung der Hochachse auf einen geringeren Wert als 1g abfällt.

## Claims

1. Arrangement for checking the plausibility of a rollover decision in a motor vehicle, one or more rotational speed and/or acceleration sensors (DS) sensing movements of the vehicle, and a processor (PZ) deriving, from the sensor signal (ω) a decision (e1) as to whether the vehicle movements will lead to rolling over, and there being means (SE) which form a criterion for checking the plausibility of a rollover decision which has been taken from measured acceleration values (az, ay) in the direction of the vertical axis and the transverse axis of the vehicle, **characterized in that** the means (SE) signal the plausibility of a rollover decision (e1) if either the acceleration (az) which is measured in the direction of the vertical axis is above a predefined upper threshold value or below a predefined lower threshold value or if the acceleration (az) which is measured in the direction of the vertical axis is between the two thresholds but at the same time the acceleration (ay) which is measured in the direction of the transverse axis exceeds a threshold (ays) which depends on the acceleration (az) measured in the direction of the vertical axis.

2. Arrangement according to Claim 1, **characterized in that** the threshold value (ays) which is associated with each acceleration value (az) in the direction of the vertical axis is stored for the acceleration (ay) in the direction of the transverse axis in a table.

3. The arrangement as claimed in Claim 1, **characterized in that** the means (SE) calculate, in accordance with a predefined algorithm, the respective threshold (ays) for the acceleration (ay) in the direction of the transverse axis from the acceleration (az) which is measured in the direction of the vertical axis at a given time.

4. Arrangement according to one of the preceding claims, **characterized in that** the threshold (ays) for the acceleration (ay) in the direction of the transverse axis is 1g given an acceleration (az) of 1g (g is the acceleration of the earth) measured in the direction of the vertical axis, and **in that** the threshold (ays) for the acceleration (ay) in the direction of the transverse axis drops in the direction of the vertical axis to a value lower than 1g as the acceleration (az) increases from 1g to 3g and decreases from 1g to 0.2g.

## Revendications

1. Dispositif de plausibilité d'une décision de retournement dans un véhicule automobile, dans lequel un ou plusieurs capteurs d'accélération (DS) et/ou de vitesse de rotation détecte(nt) les mouvements du véhicule, un processeur (PZ) décrit à partir des signaux des capteurs (ω) une décision (e1), à savoir que les mouvements du véhicule vont entraîner un retournement, et dans lequel des moyens (SE) permettant de déterminer un critère de plausibilité d'une décision de retournement constatée à partir des accélérations mesurées (az, ay) en direction de l'axe vertical et de l'axe transversal du véhicule,
**caractérisé en ce que**
les moyens (SE) signalent la plausibilité d'une décision de retournement (e1) soit lorsque l'accélération (az) mesurée en direction de l'axe vertical dépasse une valeur seuil maximum donnée ou est inférieure à une valeur seuil minimum donnée, soit lorsque l'accélération (az) mesurée en direction de l'axe vertical se trouve entre ces seuils, mais que, parallèlement, l'accélération (ay) mesurée en direction de l'axe transversal dépasse un seuil (ays) dépendant de l'accélération (az) mesurée dans la direction de l'axe vertical.

2. Dispositif selon la revendication 1,
**caractérisé en ce que**
la valeur seuil (ays) correspondant à chaque valeur d'accélération (az) en direction de l'axe vertical est classée dans un tableau pour l'accélération (ay) en direction de l'axe transversal.

3. Dispositif selon la revendication 1,
**caractérisé en ce que**
les moyens (SE) calculent le seuil correspondant (ays) pour l'accélération (ay) en direction de l'axe transversal à partir de l'accélération (az) actuellement mesurée en direction de l'axe vertical et suivant un algorithme donné.

4. Dispositif selon l'une des revendications précédentes,
**caractérisé en ce que**
le seuil (ays) pour l'accélération (ay) en direction de l'axe transversal est de 1g (g désigne l'accélération due à la gravité) pour une accélération (az) de 1 g mesurée en direction de l'axe vertical, et le seuil (ays) pour l'accélération (ay) en direction de l'axe transversal avec une accélération (az) augmentant de 1 g à 3 g et diminuant de 1 g à 0,2 g en direction de l'axe vertical est inférieur à 1 g.
